# EUROPÄISCHE PATENTSCHRIFT

(11) **EP 2 019 014 B1**
(45) Veröffentlichungstag und Bekanntmachung des Hinweises auf die Patenterteilung: **07.12.2016**
(21) Anmeldenummer: 08009398.2
(22) Anmeldetag: 21.05.2008
(51) Int. Cl.: B62B 3/06

(54) **Hubwagen**
Jack lift
Chariot élévateur

(30) Priorität: 25.07.2007 DE 102007034745
(43) Veröffentlichungstag der Anmeldung: 28.01.2009
(73) Patentinhaber: Linde Material Handling GmbH, 63743 Aschaffenburg (DE)
(72) Erfinder: Queneau, Claude, 86100 Saint Sauveur (FR)
(74) Vertreter: Geirhos, Johann

(56) Entgegenhaltungen:
- WO-A2-2007/057675
- DE-A1- 19 934 993
- GB-A- 804 091
- US-A- 2 940 767
- US-A- 3 260 534
- US-A- 4 027 771

## Beschreibung

Die Erfindung betrifft einen Hubwagen mit einem batterie-elektrischen Antriebssystem, mit einem Antriebsteil und einem relativ zum Antriebsteil anhebbaren Lastteil, wobei der Antriebsteil mit einem mittels einer Lenkdeichsel lenkbaren Antriebrad versehen ist und der Lastteil Lastarme aufweist, an denen jeweils mindestens eine Lastrolle gelagert ist, wobei zum Anheben der Lastarme jeweils ein mit der Lastrolle in Wirkverbindung stehendes Gestänge vorgesehen ist.

Derartige Hubwagen, die mittels des Antriebsrades und an den Lastarmen angeordneter Lastrollen auf einer Fahrbahn abgestützt sind, werden bevorzugt als Niederhubwagen ausgeführt. Zum Anheben des Lastteils relativ zum Antriebsteil ist ein Stellglied, beispielsweise ein Hydraulikzylinder, vorgesehen, der zwischen dem Antriebsteil und dem Lastteil, angeordnet ist. Die von dem Hydraulikzylinder auf den Lastteil ausgeübte Hubbewegung wird mittels einer Hebelanordnung in eine Horizontalbewegung der Gestänge übersetzt, welches eine Schwenkbewegung der an den Lastarmen angeordneten Lastrollenträger bewirkt, in denen die Lastrollen gelagert sind, wodurch ein Anheben der Lastarme mittels der Lastrollen erzielt wird.

Ein gattungsgemäßer, als Niederhubwagen ausgebildeter Hubwagen ist aus der DE 42 09 863 A1 bekannt. Bei dem aus der DE 42 09 863 A1 bekannten Hubwagen sind die Lastarme aus Stahlblech gefertigt und jeweils als Hohlprofil mit einem nach unten offenen Querschnitt ausgebildet, wobei in dem Hohlprofil jeweils das zur Betätigung der Lastrollen vorgesehene Gestänge angeordnet ist. Der Antriebsteil gattungsgemäßer Hubwagen ist in der Regel aus plattenförmigen Blechteilen zusammengefügt, wodurch der Hubwagen ein hohes Eigengewicht aufweist.

Bei derartigen Hubwagen kann es jedoch vorkommen, insbesondere bei angehobenen Lastarmen, dass sich das Gestänge außerhalb des Hohlprofils befindet, so dass das Gestänge beim Überfahren von Hindernissen, beispielsweise beim Überfahren von Bordsteinkanten oder Bordsteinabsenkungen an Grundstückseinfahrten, beschädigt oder verformt werden kann.

Bei gattungsgemäßen Hubwagen kann zudem aufgrund der nach unten offenen Hohlprofile der Lastarme eine Bedienperson beim Umgreifen der Lastarme, um den Hubwagen zu transportieren oder anzuheben, einem erhöhten Verletzungsrisiko ausgesetzt sein.

Aus der US 2 940 767 A ist ein Handgabelhubwagen bekannt, dessen Lastarme einen geschlossenen Querschnitt aufweisen.

Die US 4 027 771 A offenbart ein Handgabelhubwagen, der nach unten offene Lastarme aufweist. An einer die beiden Lastarme des Lastteils verbindenden Querstrebe ist ein Schutzbügel angeordnet, innerhalb dem gelenkte Laufräder angeordnet sind.

Aus der DE 199 34 993 A1 ist ein Hubwagen mit einem von einem Elektromotor angetrieben Antriebsrad bekannt, dessen Lastteil aus zwei Lastarmen besteht, die von geschlossenen Hohlprofilen gebildet werden.

Der vorliegenden Erfindung liegt die Aufgabe zugrunde, einen Hubwagen der eingangs genannten Gattung zur Verfügung zu stellen, der bei leichter und robuster Bauweise eine geschützte Anordnung des Gestänges und eine einfache und sichere Handhabung durch eine Bedienperson ermöglicht.

Die Aufgabe wird erfindungsgemäß dadurch gelöst, dass der Antriebsteil und der Lastteil im Wesentlichen von einstückigen Hohlprofilen mit einem geschlossenen Querschnitt gebildet sind, wobei innerhalb der die Lastarme bildenden Hohlprofile die Gestänge angeordnet sind und wobei die den Antriebsteil bildenden Hohlprofile einen bügelförmigen Rahmenabschnitt zur Aufnahme des Antriebrades bilden, an dem eine das Antriebsrad aufweisende Fahrantriebseinheit lenkbar angeordnet ist. Der erfindungsgemäße Gedanke besteht somit darin, den Antriebsteil und den Lastteil des Hubwagens aus einstückigen Hohlprofilen zusammenzusetzen, die ein geschlossenes Profil aufweisen. Derartige Hohlprofile weisen bei einem geringen Gewicht eine hohe Steifigkeit und Festigkeit auf. Die den Antriebsteil bildenden Hohlprofile bilden einen bügelförmigen Rahmenabschnitt zur Aufnahme des Antriebsrades. Ein derartiges, von einem bügelförmigen Rahmenabschnitt gebildetes Antriebsteil weist bei geringem Eigengewicht eine hohe Stabilität und Festigkeit auf und kann auf einfache Weise von Hohlprofilen gebildet werden. Dadurch wird ein erfindungsgemäßer Hubwagen zur Verfügung gestellt, der bei geringem Eigengewicht eine robuste und stabile Bauweise aufweist. Durch die Anordnung der die Lastrollen betätigenden Gestänge innerhalb der die Lastarme bildenden Hohlprofile wird weiterhin eine vor Beschädigungen oder Verformungen beim Überfahren von Hindernissen geschützte Anordnung der Gestänge erzielt. Zudem ermöglicht die Bauweise des Antriebsteils und des Lastteils aus Hohlprofilen, die einen geschlossenen Querschnitt aufweisen, dass der Hubwagen von einer Bedienperson, insbesondere im Bereich der Lastarme des Lastteils mit der Hand sicher und mit geringer Verletzungsgefahr umgriffen werden kann, wodurch der erfindungsgemäße Hubwagen auf sichere Weise transportiert oder angehoben werden kann.

Die Hohlprofile weisen hierbei zweckmäßigerweise einen kreisförmigen Querschnitt auf. Mit derartigen Rohrprofilen wird bei geringem Eigengewicht eine hohe Stabilität und Festigkeit des Hubwagen erzielt, wobei zudem ein sicheres Umgreifen der Rohrprofile durch die Bedienperson ermöglicht wird.

Gemäß einer bevorzugten Ausführungsform der Erfindung sind die Lastarme an der Oberseite jeweils mit einer ebenen Fläche versehen. Hierdurch kann auf einfache Weise an der Oberseite der Lastarme eine ebene Auflagefläche für eine Last, beispielsweise eine Palette, eine Gitterbox oder einen Kleinteilebehälter, und somit ein sicherer Transport der Last erzielt werden.

Hinsichtlich eines geringen Bauaufwands ist es vorteilhaft, wenn gemäß einer Ausgestaltungsform der Erfindung die die Lastarme bildenden Hohlprofile an der Oberseite jeweils mit einer ebenen Fläche versehen sind und somit die ebene Fläche einstückig an den die Lastarme bildenden Hohlprofilen angeformt ist.

Gegenüber dieser einstückigen Bauweise kann gemäß einer weiteren Ausgestaltungsform der Erfindung an der Oberseite der die Lastarme bildenden Hohlprofile jeweils ein mit einer ebenen Fläche versehenes, weiteres Profilelement angeordnet sein. Durch das weitere Profilelement kann bei Hohlprofilen, die einen kreisförmigen Querschnitt aufweisen und die Lastarme bilden, mit geringem zusätzlichen Bauaufwand die ebene Fläche an der Oberseite der Lastarme für einen sicheren Transport der aufgenommenen Last erzeugt werden. Zudem ist durch das weitere Profilelement eine weitere Stabilitätserhöhung der Lastarme, insbesondere eine erhöhte Verwindungssteifigkeit der Lastarme, mit geringem Bauaufwand erzielbar.

Das weitere Profilelement weist vorteilhafterweise einen nach unten offenen U-förmigen Querschnitt auf, wobei sich das den Lastarm bildende Hohlprofil über die seitliche Schenkel des Profilelements erstreckt. Hierdurch kann mittels des weiteren Profilelements auf einfache Weise die ebene Fläche und eine stabilitätserhöhende Wirkung an den Lastarmen erzielt werden, wobei dadurch, dass sich das Hohlprofil über die seitlichen Schenkel des weiteren Profilelements erstreckt, scharfe Kanten beim Umgreifen des von dem Hohlprofil und dem Profilelement gebildeten Lastarms wirksam vermieden werden.

Weitere Vorteile sind erzielbar, wenn das weitere Profilelement im Bereich des antriebsteilseitigen Endes des Lastarmes eine geringere Breite als im Bereich des lastteilseitigen Endes des Lastarmes aufweist. Hierdurch wird auf einfache Weise die Verwindungssteifigkeit der Lastarme erhöht und zudem erzielt, dass am lastteilseitigen Ende der Lastarme im Bereich der Lastrollen eine große Aufstandsfläche für die Last zur Verfügung steht, um beispielsweise bei einer lediglich an den Spitzen der Lastarme teilsweise aufgenommenen Last ein Ziehen oder Schieben der von einer Palette, einer Gitterbox oder einem Kleinteilebehälter gebildeten Last zu ermöglichen.

Bei einer einstückigen Ausbildung der die Lastarme bildenden Hohlprofile mit der ebenen Fläche an der Oberseite der Lastarme können die die Lastarme bildenden Hohlprofile gemäß einer Ausgestaltungsform der Erfindung von jeweils einem Hohlprofil mit einem im wesentlichen kreisförmigen Querschnitt gebildet sein, der an der Oberseite mit einer ebenen Fläche versehen ist. Ein derartiges, an der Oberseite abgeplattetes Rohrprofil ist auf einfache Weise herstellbar und weist unter Bildung einer ebenen Fläche für die Lastaufnahme eine hohe Stabilität und Festigkeit auf.

Gemäß einer weiteren Ausgestaltungsform der Erfindung können die die Lastarme bildenden Hohlprofile jeweils einen dreieckförmigen Querschnitt aufweisen, wobei die Basis des dreieckförmigen Querschnitts die an der Oberseite des Lastarmes angeordnete ebene Fläche bildet und die Spitze des dreieckförmigen Querschnitts abgerundet ist. Hierdurch wird ebenfalls auf einfache Weise ein Hohlprofil mit einer hohen Stabilität und Festigkeit zur Verfügung gestellt, das eine ebene Fläche für die Lastaufnahme aufweist, wobei aufgrund der abgerundeten Spitze eine sichere Handhabung und ein sicheres Umgreifen durch die Bedienperson ermöglicht wird.

Besondere Vorteile ergeben sich, wenn an den den Lastarmen bildenden Hohlprofilen an dem dem Antriebsteil zugewandten Bereich ein von einstückigen, geschlossenen Hohlprofilen gebildeter Bügelabschnitt angeordnet ist. Hierdurch kann mit geringem Bauaufwand und mit geringem Eigengewicht eine Abgrenzung zwischen dem Lastteil und dem Antriebsteil erzielt werden, wobei an diesem Bügelabschnitt auf einfache Weise weitere Aggregate, beispielsweise eine Batterie für ein batterie-elektrisches Antriebssystem des Hubwagens angeordnet werden kann.

Zweckmäßigerweise ist das Antriebsrad als luftbereiftes Antriebsrad ausgebildet. Hierdurch ist der erfindungsgemäße Hubwagen für Anwendungen außerhalb von Lagerhallen und Produktionsbetrieben geeignet bei denen eine unebene Fahrbahnoberfläche gegeben ist, beispielsweise auf Straßen und Plätzen, wodurch aufgrund des als luftbereiften Antriebsrades ausgebildeten Antriebsrades mit dem erfindungsgemäßen Hubwagen Hindernisse, beispielsweise Bordsteinkanten und Bordsteinabsenkungen, auf einfache Weise überwunden werden können.

Weitere Vorteile und Einzelheiten der Erfindung werden anhand der in den schematischen Figuren dargestellten Ausführungsbeispiele näher erläutert. Hierbei zeigt
- Figur 1: einen erfindungsgemäßen Hubwagen in einer perspektivischen Darstellung,
- Figur 2a: eine perspektivische Darstellung eines Lastarmes einer ersten Ausführungsform eines erfindungsgemäßen Hubwagens,
- Figur 2b: einen Schnitt entlang der Linie A-A in Figur 2a,
- Figur 3a: eine perspektivische Darstellung eines Lastarmes gemäß der Figur 2a in einer zweiten Ausführungsform eines erfindungsgemäßen Hubwagens
- Figur 3b: einen Schnitt entlang der Linie B-B in Figur 3a,
- Figur 4a: eine perspektivische Darstellung eines Lastarmes gemäß der Figur 2a einer dritten Ausführungsform eines erfindungsgemäßen Hubwagens,
- Figur 4b: einen Schnitt entlang der Linie C-C in Figur 4a und
- Figur 5: eine Draufsicht auf die Lastarme eine Hubwagens gemäß den Figuren 4a, 4b.

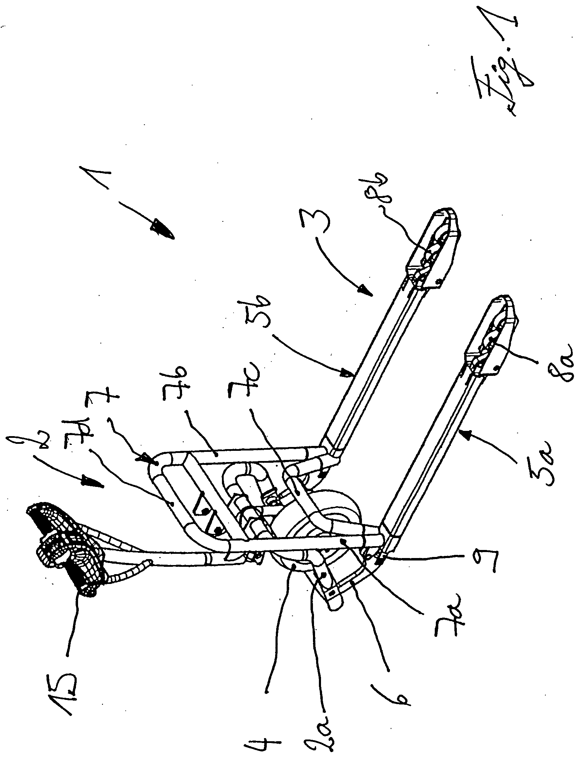

In der Figur 1 ist ein erfindungsgemäßer, als Niederhubwagen ausgebildeter Hubwagen 1 mit einem Antriebsteil 2 und einem Lastteil 3 dargestellt. Der Antriebsteil 2 umfasst einen bügelförmigen Rahmenabschnitt 2a, an dem eine ein Antriebsrad 4 aufweisende Fahrantriebseinheit lenkbar angeordnet ist. Das Lenken des Hubwagens 1 erfolgt mittels einer mit dem Antriebsrad 4 verbundenen Deichsel 15. Das Antriebsrad 4 ist hierbei als luftbereiftes Antriebsrad ausgebildet.

Zum Lastteil 3 gehören zwei Lastarme 5a, 5b, mit denen Lasten, beispielsweise Paletten, Gitterboxen oder Kleinteilebehälter aufgenommen, angehoben und transportiert werden können. An dem dem Antriebsteil 2 zugewandten Bereich des Lastteils 3 ist am Lastteil 3 ein vertikaler Bügelabschnitt 7 angeordnet, der von seitlichen Längsbügeln 7a, 7b, einem unteren Querbügel 7c und einem oberen Querbügel 7d gebildet ist.

Der Lastteil 3 ist an dem Antriebsteil 2 mittels einer von Gelenkhebeln 6 gebildeten Hebelanordnung in vertikaler Richtung bewegbar angeordnet. Hierzu ist ein nicht mehr dargestellter Hydraulikzylinder vorgesehen, der zwischen dem Antriebsteil 2 und dem Lastteil 3 angeordnet ist und eine auf den Lastteil 3 wirkende Hubbewegung erzeugt.

Der Lastteil 3 stützt sich mittels Lastrollen 8a, 8b auf einer Fahrbahn ab. Die Lastrollen 8a, 8b sind an den lastseitigen Enden der Lastarme 5a, 5b in schwenkbar an den Lastarmen 5a, 5b angeordneten, nicht mehr dargestellten Lastrollenträgern drehbar angeordnet. Die Lastrollenträger stehen hierbei mittels jeweils eines Gestänges 9 mit dem entsprechenden Gelenkhebel 6 in Wirkverbindung, wodurch eine Hubbewegung eines nicht mehr dargestellten Hydraulikzylinders, der zwischen dem Lastteil und dem Antriebsteil angeordnet ist, mittels der Gelenkhebel 6 und der Gestänge 9 in eine vertikale Bewegung der Lastrollen 8a, 8b umgewandelt wird und somit der Lastteil 3 relativ zum Antriebsteil 2 anhebbar und absenkbar ist. Die Gestänge 9 können hierbei als Druckstangen oder Zugstangen ausgebildet sein.

Erfindungsgemäß ist der bügelförmige Rahmenabschnitt 2a des Antriebsteils 2 und der von den Lastarmen 5a, 5b sowie dem Bügelabschnitt 7 gebildete Lastteil 3 im Wesentlichen von einstückigen Hohlprofilen 10a, 10b, 11 mit einem geschlossenen Querschnitt gebildet.

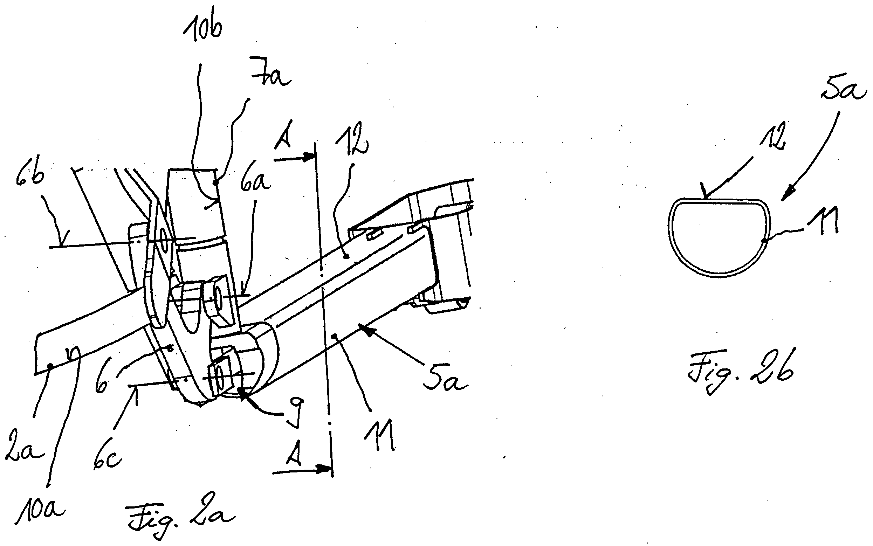

Wie aus der Figur 2a ersichtlich ist, in der der erfindungsgemäße Hubwagen im Bereich des Lastarmes 5a näher dargestellt ist, können die den Rahmenabschnitt 2a sowie die den Bügelabschnitt 7 bildenden Hohlprofile 10a, 10b von Rohrprofilen mit einem kreisringförmigen Querschnitt gebildet sein.

Innerhalb der die Lastarme 5a bzw. 5b bildenden Hohlprofile 11 ist jeweils das mit dem Gelenkhebel 6 und dem Lastrollenträger in Wirkverbindung stehende Gestänge 9 angeordnet.

Der Gelenkhebel 6 ist hierbei an einer ersten Gelenkachse 6a an dem seitlichen Längsbügel 7a und an einer zweiten Gelenkachse 6b an dem bügelförmigen Rahmenabschnitt 2a gelagert und steht mittels einer dritten Gelenkachse 6c drehbar mit dem Gestänge 9 in Verbindung.

Die die Lastarme 5a, 5b bildenden Hohlprofile 11 sind jeweils an der Oberseite mit einer ebenen Fläche 12 versehen. Das Hohlprofil 11 der Lastarme 5a bzw. 5b weist - wie aus der Figur 2b ersichtlich - hierbei einen im Wesentlichen kreisförmigen Querschnitt auf, der im oberen Bereich mit einer Abplattung versehen ist, die die ebene Fläche 12 bildet.

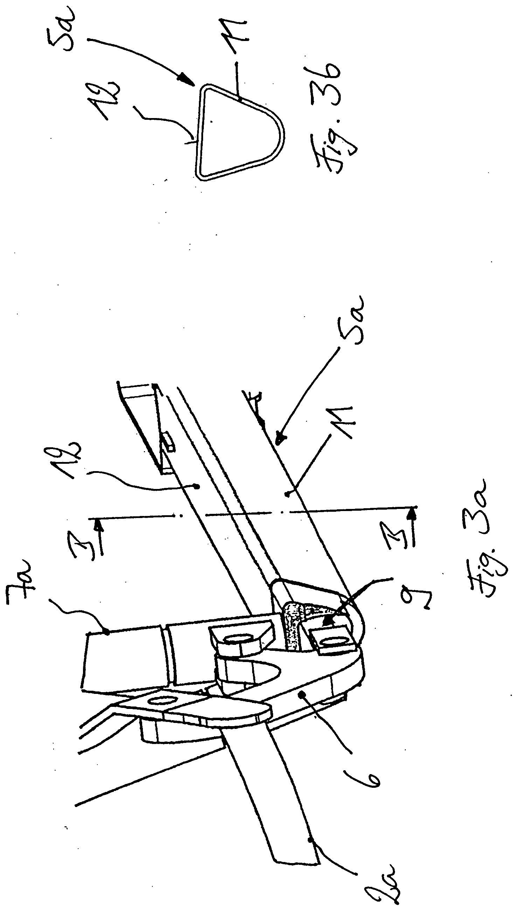

In den Figuren 3a und 3b ist eine weitere Ausführungsform der Erfindung dargestellt, wobei die die Lastarme 5a, 5b bildenden Hohlprofile 11 jeweils einen dreieckförmigen Querschnitt aufweisen. Die Basis des dreieckförmigen Querschnitts bildet hierbei die an der Oberseite des Lastarms 5a bzw. 5b angeordnete ebene Fläche 12. Die Spitze 13 des dreieckförmigen Querschnitts der Hohlprofile 11 ist abgerundet.

Gemäß den Figuren 2a, 2b und 3a, 3b ist die ebene Fläche 12 jeweils an dem den Lastarm 5a bzw. 5b bildenden Hohlprofil 11 angeformt und somit das Hohlprofil 11 und die ebene Fläche 12 einstückig ausgebildet.

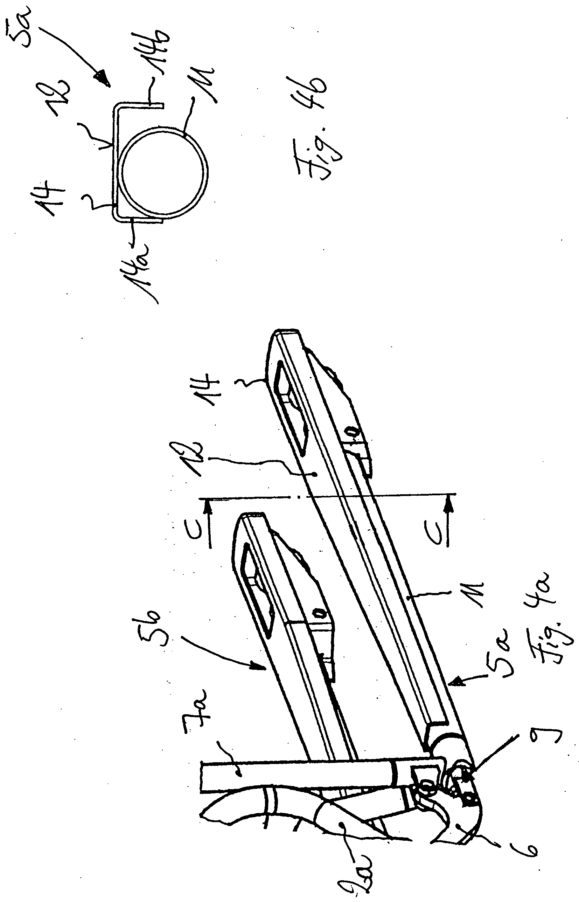

Bei der in den Figuren 4a und 4b dargestellten weiteren Ausführungsform der Erfindung ist die ebene Fläche 12 an einem weiteren Profilelement 14 ausgebildet, das an der Oberseite des den Lastarm 5a bzw. 5b bildenden Hohlprofils 11 angeordnet ist. Das Hohlprofil 11 ist hierbei als Rohrprofil mit einem kreisförmigen Querschnitt ausgebildet. Das weitere Profilelement 14 ist mit einem nach unten offenen U-förmigen Querschnitt versehen. Die seitlichen Schenkel 14a, 14b des weiteren Profilelements 14 sind hierbei derart bemessen, dass sich das Hohlprofil 11 über die seitlichen Schenkel 14a, 14b des Profilelements 14 erstreckt.

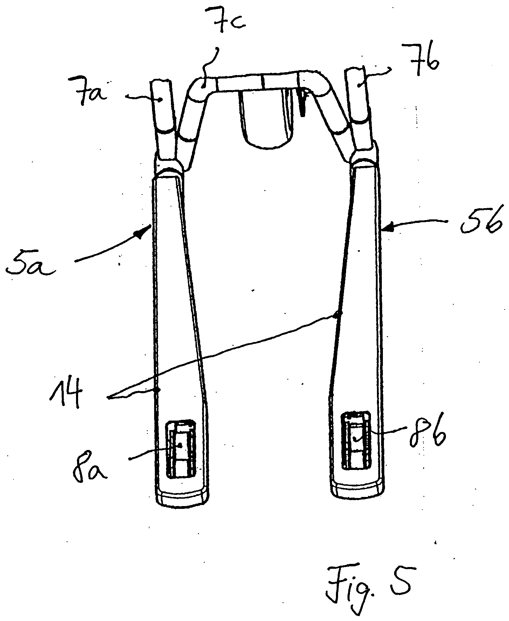

Wie aus der Figur 5 ersichtlich ist, weist das weitere Profilelement 14 jeweils im Bereich des Antriebsteils 2 eine geringere Breite als im Bereich der Lastrollen 8a bzw. 8b und somit des lastseitigen Endes auf, wodurch die ebene Fläche 12 an der Oberseite der Lastarme 5a bzw. 5b mit zunehmendem Abstand vom Antriebsteil 2 zunimmt.

Aufgrund der Bauweise des Antriebsteils 2 sowie des Lastteils 3 aus Hohlprofilen 10, 10b, 11 mit einem geschlossenen Querschnitt wird ein erfindungsgemäßer Hubwagen zur Verfügung gestellt, der bei geringem Eigengewicht eine hohe Festigkeit und Stabilität und somit eine robuste Bauweise aufweist. Durch die Anordnung der die Lastrollen 8a, 8b betätigenden Gestänge 9 innerhalb der die Lastarme 5a, 5b bildenden Hohlprofile 11 wird eine vor Beschädigungen geschützte Anordnung der Gestänge 9 erzielt, wobei in Verbindung mit dem als luftbereiften Antriebsrad ausgebildeten Antriebsrad 4 mit dem erfindungsgemäßen Hubwagen 1 Hindernisse auf einfache Weise überwunden werden können und der Hubwagen für Anwendungen außerhalb von Lagerhallen und Produktionsbetrieben mit einer unebenen Fahrbahnoberfläche, beispielsweise auf Straßen und Plätzen geeignet ist. Durch die leichte Bauweise des erfindungsgemäßen Hubwagens 1 und die Verwendung von geschlossenen Hohlprofilen 10a, 10b, 11 kann zudem eine Bedienperson den erfindungsgemäßen Hubwagen 1 an den Hohlprofilen 10a, 10b, 11 sicher umgreifen, um den erfindungsgemäßen Hubwagen 1 zum Transport auf ein Transportfahrzeug anzuheben und zu verladen.

## Patentansprüche

1. Hubwagen mit einem batterie-elektrischen Antriebssystem, mit einem Antriebsteil und einem relativ zum Antriebsteil anhebbaren Lastteil, wobei der Antriebsteil mit einem mittels einer Lenkdeichsel lenkbaren Antriebrad versehen ist und der Lastteil Lastarme aufweist, an denen jeweils mindestens eine Lastrolle gelagert ist, wobei zum Anheben der Lastarme jeweils ein mit der Lastrolle in Wirkverbindung stehendes Gestänge vorgesehen ist, **dadurch gekennzeichnet, dass** der Antriebsteil (2) und der Lastteil (3) im Wesentlichen von einstückigen Hohlprofilen (10a; 10b; 11) mit einem geschlossenen Querschnitt gebildet sind, wobei innerhalb der die Lastarme (5a; 5b) bildenden Hohlprofile (11) die Gestänge (9) angeordnet sind und wobei die den Antriebsteil (2) bildenden Hohlprofile (10a) einen bügelförmigen Rahmenabschnitt (2a) zur Aufnahme des Antriebrades (4) bilden, an dem eine das Antriebsrad (4) aufweisende Fahrantriebseinheit lenkbar angeordnet ist.

2. Hubwagen nach Anspruch 1, **dadurch gekennzeichnet, dass** die Hohlprofile (10a; 10b; 11) einen kreisförmigen Querschnitt aufweisen.

3. Hubwagen nach Anspruch 1 oder 2, **dadurch gekennzeichnet, dass** die Lastarme (5a; 5b) an der Oberseite jeweils mit einer ebenen Fläche (12) versehen sind.

4. Hubwagen nach Anspruch 3, **dadurch gekennzeichnet, dass** die die Lastarme (5a; 5b) bildenden Hohlprofile (11) an der Oberseite mit jeweils einer ebenen Fläche (12) versehen sind.

5. Hubwagen nach Anspruch 3, **dadurch gekennzeichnet, dass** an der Oberseite der die Lastarme (5a; 5b) bildenden Hohlprofile (11) jeweils ein mit einer ebenen Fläche (12) versehenes weiteres Profilelement (14) angeordnet ist.

6. Hubwagen nach Anspruch 5, **dadurch gekennzeichnet, dass** das weitere Profilelement (14) einen nach unten offenen U-förmigen Querschnitt aufweist, wobei sich das den Lastarm (5a; 5b) bildende Hohlprofil (11) über die seitlichen Schenkel (14a, 14b) des Profilelements (14) erstreckt.

7. Hubwagen nach einem der Ansprüche 5 oder 6, **dadurch gekennzeichnet, dass** das weitere Profilelement (14) im Bereich des antriebsteilseitigen Endes des Lastarmes (5a, 5b) eine geringere Breite als im Bereich des lastteilseitigen Endes des Lastarmes (5a, 5b) aufweist.

8. Hubwagen nach Anspruch 4, **dadurch gekennzeichnet, dass** die die Lastarme (5a; 5b) bildenden Hohlprofile (11) jeweils einen im Wesentlichen kreisförmigen Querschnitt aufweisen, der an der Oberseite mit der ebenen Fläche (12) versehen ist.

9. Hubwagen nach Anspruch 4, **dadurch gekennzeichnet, dass** die die Lastarme (5a; 5b) bildenden Hohlprofile (11) jeweils einen dreieckförmigen Querschnitt aufweisen, wobei die Basis des dreieckförmigen Querschnitts die ebene Fläche (12) bildet und die Spitze (13) des dreieckförmigen Querschnitts abgerundet ist.

10. Hubwagen nach einem der vorangegangenen Ansprüche, **dadurch gekennzeichnet, dass** an den den Lastarmen (5a, 5b) bildenden Hohlprofilen (11) an dem dem Antriebsteil (2) zugewandten Bereich ein von einstückigen, geschlossenen Hohlprofilen (10b) gebildeter Bügelabschnitt (7) angeordnet ist.

11. Hubwagen nach einem der vorangegangenen Ansprüche, **dadurch gekennzeichnet, dass** das Antriebsrad (2) als luftbereiftes Antriebsrad ausgebildet ist.

## Claims

1. Lift truck with an electric battery drive system, with a drive part and a load part which can be raised relative to the drive part, wherein the drive part is provided with a drive wheel steerable by means of a steering tiller, and the load part has load arms, on which at least one load roller is in each case mounted, wherein a respective linkage operatively connected to the load roller is provided for raising the load arms, **characterized in that** the drive part (2) and the load part (3) are substantially formed by single-piece hollow profiles (10a; 10b; 11) with a closed cross section, wherein the linkages (9) are arranged within the hollow profiles (11) forming the load arms (5a; 5b), and wherein the hollow profiles (10a) forming the drive part (2) form a bow-shaped frame section (2a) for receiving the drive wheel (4), on which frame section a traction drive unit having the drive wheel (4) is steerably arranged.

2. Lift truck according to Claim 1, **characterized in that** the hollow profiles (10a; 10b; 11) have a circular cross section.

3. Lift truck according to Claim 1 or 2, **characterized in that** the load arms (5a; 5b) are each provided with a flat surface (12) on the upper side.

4. Lift truck according to Claim 3, **characterized in that** the hollow profiles (11) forming the load arms (5a; 5b) are provided with a respective flat surface (12) on the upper side.

5. Lift truck according to Claim 3, **characterized in that** a respective further profile element (14) provided with a flat surface (12) is arranged on the upper side of the hollow profiles (11) forming the load arms (5a; 5b).

6. Lift truck according to Claim 5, **characterized in that** the further profile element (14) has a downwardly open U-shaped cross section, wherein the hollow profile (11) forming the load arm (5a; 5b) extends over the lateral limbs (14a, 14b) of the profile element (14).

7. Lift truck according to either of Claims 5 and 6, **characterized in that** the further profile element (14) has a smaller width in the region of the drive-part-side end of the load arm (5a, 5b) than in the region of the load-part-side end of the load arm (5a, 5b).

8. Lift truck according to Claim 4, **characterized in that** the hollow profile (11) forming the load arms (5a; 5b) each have a substantially circular cross section which is provided with the flat surface (12) on the upper side.

9. Lift truck according to Claim 4, **characterized in that** the hollow profiles (11) forming the load arms (5a; 5b) each have a triangular cross section, wherein the base of the triangular cross section forms the flat surface (12) and the tip (13) of the triangular cross section is rounded.

10. Lift truck according to one of the preceding claims, **characterized in that** a bow section (7) formed by single-piece closed hollow profiles (10b) is arranged on the region which faces the drive part (2) on the hollow profiles (11) forming the load arms (5a; 5b).

11. Lift truck according to one of the preceding claims, **characterized in that** the drive wheel (2) is designed as a drive wheel with a pneumatic tyre.

## Revendications

1. Chariot élévateur comprenant un système d'entraînement électrique par batterie, avec une partie d'entraînement et une partie de charge pouvant être soulevée par rapport à la partie d'entraînement, la partie d'entraînement étant pourvue d'une roue d'entraînement pouvant être dirigée au moyen d'un timon de direction et la partie de charge présentant des bras de charge au niveau desquels est supporté à chaque fois au moins un rouleau de charge, une tringlerie en liaison fonctionnelle avec le rouleau de charge étant dans chaque cas prévue pour soulever les bras de charge, **caractérisé en ce que** la partie d'entraînement (2) et la partie de charge (3) sont formées sensiblement par des profilés creux formés d'une seule pièce (10a ; 10b ; 11) de section transversale fermée, les tringleries (9) étant disposées à l'intérieur des profilés creux (11) formant les bras de charge (5a ; 5b) et les profilés creux (10a) formant la partie d'entraînement (2) formant une portion de cadre en forme d'étrier (2a) pour recevoir la roue d'entraînement (4), au niveau de laquelle est disposée de manière dirigeable une unité d'entraînement de conduite présentant la roue d'entraînement (4).

2. Chariot élévateur selon la revendication 1, **caractérisé en ce que** les profilés creux (10a ; 10b ; 11) présentent une section transversale de forme circulaire.

3. Chariot élévateur selon la revendication 1 ou 2, **caractérisé en ce que** les bras de charge (5a ; 5b) sont pourvus au niveau du côté supérieur à chaque fois d'une surface plane (12).

4. Chariot élévateur selon la revendication 3, **caractérisé en ce que** les profilés creux (11) formant les bras de charge (5a ; 5b) sont pourvus au niveau du côté supérieur à chaque fois d'une surface plane (12).

5. Chariot élévateur selon la revendication 3, **caractérisé en ce qu'**au niveau du côté supérieur des profilés creux (11) formant les bras de charge (5a ; 5b) est à chaque fois disposé un élément profilé supplémentaire (14) pourvu d'une surface plane (12).

6. Chariot élévateur selon la revendication 5, **caractérisé en ce que** l'élément profilé supplémentaire (14) présente une section transversale en forme de U ouvert vers le bas, le profilé creux (11) formant le bras de charge (5a ; 5b) s'étendant au-delà des branches latérales (14a, 14b) de l'élément profilé (14).

7. Chariot élévateur selon l'une quelconque des revendications 5 ou 6, **caractérisé en ce que** l'élément profilé supplémentaire (14) présente, dans la région de l'extrémité du bras de charge (5a, 5b) du côté de la partie d'entraînement, une largeur inférieure à celle dans la région de la partie du bras de charge (5a, 5b) du côté de la partie de charge.

8. Chariot élévateur selon la revendication 4, **caractérisé en ce que** les profilés creux (11) formant les bras de charge (5a ; 5b) présentent à chaque fois une section transversale de forme sensiblement circulaire qui est pourvue au niveau du côté supérieur d'une surface plane (12).

9. Chariot élévateur selon la revendication 4, **caractérisé en ce que** les profilés creux (11) formant les bras de charge (5a ; 5b) présentent à chaque fois une section transversale triangulaire, la base de la section transversale triangulaire formant la surface plane (12) et la pointe (13) de la section transversale triangulaire étant arrondie.

10. Chariot élévateur selon l'une quelconque des revendications précédentes, **caractérisé en ce qu'**au niveau des profilés creux (11) formant les bras de charge (5a, 5b) est disposé, au niveau de la région tournée vers la partie d'entraînement (2), une portion en étrier (7) formée à partir de profilés creux fermés formés d'une seule pièce (10b).

11. Chariot élévateur selon l'une quelconque des revendications précédentes, **caractérisé en ce que** la roue d'entraînement (2) est réalisée sous forme de roue d'entraînement pourvue d'un pneu.
